# EUROPEAN PATENT SPECIFICATION

(11) **EP 0 843 129 B1**
(45) Date of publication and mention of the grant of the patent: **16.10.2002**
(21) Application number: 97660120.3
(22) Date of filing: 07.11.1997
(51) Int. Cl.: F23L 11/00, F16K 1/226

(54) **Duct closing damper**
Schliessklappe eines Kanals
Vanne d'obturation d'un conduit

(30) Priority: 19.11.1996 FI 960572 U
(43) Date of publication of application: 20.05.1998
(73) Proprietor: SAMMET DAMPERS OY, 41310 Leppävesi (FI)
(72) Inventor: Minkkinen, Kimmo, 40800 Vaajakoski (FI)
(74) Representative: Helke, Kimmo Kalervo

(56) References cited:
- EP-A- 0 663 549
- CA-A- 1 260 356
- US-A- 3 642 248
- US-A- 4 020 754
- US-A- 4 088 299

## Description

The object of the invention is a duct component, in which there is a so-called disc damper for closing an opening in a duct, a frame part and operating devices for operating the disc damper. In addition, the duct component has a primary sealing surface in the frame part and a secondary sealing surface in the disc damper and spring members to centre the sealing surfaces tightly against each other.

Such a seal assembly with flexible members to center and seal the sealing surfaces is known by US-A-4 088 299.

In factories and especially in power plants, many different kinds of ducts are used to lead flue gases away from processes. In addition, so-called dampers, which are almost without exception hinged in the duct, are used to control the flow of flue gases. Operating devices, which are almost without exception remotely controlled, are used to turn large rotating dampers. To achieve adequate sealing, some type of sealing is used in present damper systems, and, in addition, members for centring the damper are used at some point in the system.

Particularly when dealing with hot, high-pressure flue gases, it is difficult to seal a closed damper. The use of a metal damper and some kind of flexible material can create a tight seal, but the construction is extremely susceptible to wear. A leak due to wear increases wear still further. On the other hand, the use of two metallic sealing surfaces is not very liable to wear, while a sufficient seal can be achieved with the aid of operating devices. However, aligning two metal surfaces to each other requires the damper to be centred precisely, because metal components have little adaptability to one another. Flexible attachments or jointing used to facilitate centring make control of the damper imprecise, while wear in the components increases the slack in the damper's movement.

The invention is intended to create a tight, but also durable damper. The characteristic features of the invention appear in the accompanying Patent Claims. Simple and reliable joint solutions and operating devices can be used in the application of the invention.

In the following text, the invention is illustrated in detail with reference to the accompanying drawings, which show one embodiment of the invention, in which
- Figure 1: shows a duct component according to the invention, and
- Figure 2: shows a detailed cross-section of the location of the duct component, when the damper is closed.

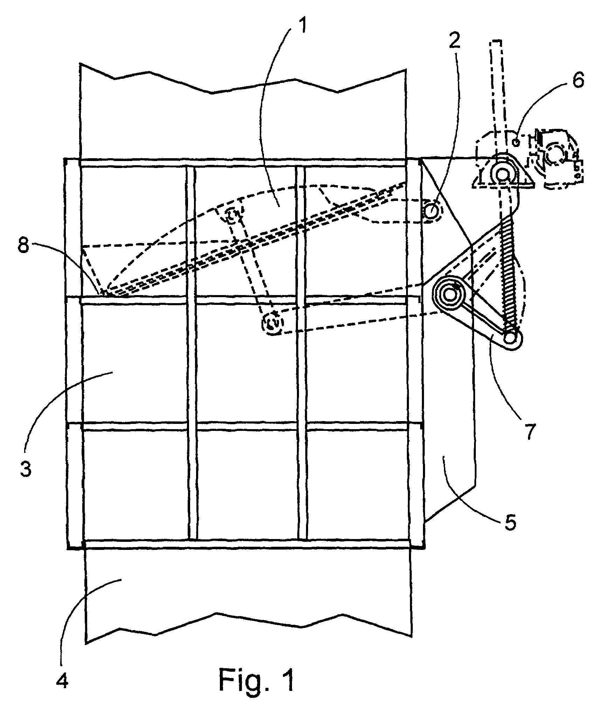

In Figure 1, disc damper 1 is in the closed position. Disc damper 1 is attached by means of joint 2 to frame part 3, from which flue 4 extends in both directions. In frame part 3 there is a protrusion 5, to which operating devices 6 are attached. When disc damper 1 is opened, the levers 7 of the operating devices 6 turn inside protrusion 5 and remain protected from flowing gases by the cup-shaped disc damper 1. Disc damper 1, which is slightly curved, presses against the wall of the duct and does not impede the flow of gas.

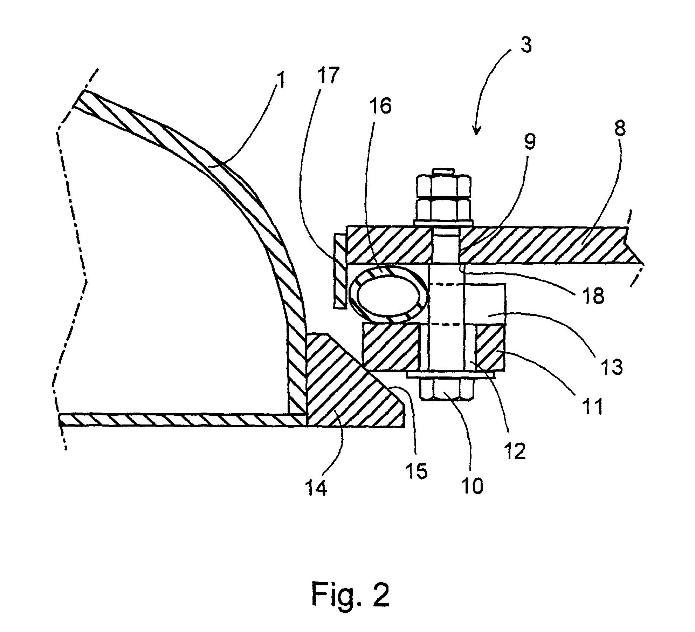

Figure 2 shows a cross-section of the completed assembly, in which all the structural components are shown when disc damper 1 is closed. A metal frame plate 8, in which there is a round opening smaller than disc damper 1, is fitted to frame part 3. In frame plate 8, there are small holes 9, set at regular intervals around the edge of the aforementioned opening. Metal sealing ring 11 is attached to frame plate 8 with bolts 10, and has holes 12 at the same places as frame plate 8. In addition, there are centring pieces 13 at equal intervals between the holes 12, which, when sealing ring 11 is centred, i.e. in the position shown in the figure, extend from the outer circumference of the sealing ring 11, as far as an imaginary curve running through the bolts' 10 sides that are on the same side as the opening. The internal diameter of sealing ring 11 is smaller than the outer diameter of the damper 1, while the outer diameter is larger than the inner diameter of the opening in frame plate 8.

A triangular blank 14 with a triangular cross-section, which after machining forms a conical counter-surface 15 of disc damper 1 against sealing ring 11, is attached around the curved outer edge of disc damper 1. Due to its cup-like shape, disc damper 1 is made sufficiently stiff with a reasonable thickness of material.

To centre the sealing ring 11, there is a flexible, tubular silicon gasket 16 between the frame plate 8 and sealing ring 11. On the one side, the gasket 16 is prevented from dropping out by the attachment bolts 10 and the centring pieces 13, as well as by a metal rim 17 attached to the opening of the frame plate 8, which also protects the gasket 16 from the flow of gas. The diameters of the holes 12 in the sealing ring 11 are essentially larger than the diameters of the attachment bolts 10. Thus, the sealing ring 11 can move both vertically and horizontally. In addition, in the attachment bolts 11 there is a shoulder 18, which corresponds to the frame plate 8. In this case, the attachment bolts 10 are firmly in place, so that only the sealing ring 11 moves when the gasket 16 yields.

Due to the two-way movement of the sealing ring 11, the disc damper 1 can easily be jointed rigidly, allowing the precise operation and positioning of disc damper 1. In addition, the tightness of a disc damper 1 according to the invention permits a small error of angle, as well as a centering error and errors arising from thermal expension. Gasket 16 need not be tubular, other shapes, such as a semi-circle, can also be used. The gasket material can also vary, due to its protected location.

Due to the rigid jointing of the disc damper 1, the flexibly positioned sealing ring 11, and the conical sealing surface, the disc damper also accommodates itself to variations in heat and pressure, without the tightness suffering.

In hot or chemically demanding conditions, it is most advantageous to use graphite cord as the seal. This can also be formed by impregnating glass-fibre cord with graphite.

## Claims

1. A duct component, in which there is a so-called disc damper (1) for closing an opening in a duct (4), frame part (3) and operating devices (6, 7) for operating the disc damper (1) and a primary sealing surface in the frame part (3) and a secondary sealing surface in the disc damper (1), and flexible members for sealing the sealing surfaces tightly against each other, **characterized in that** the primary sealing surface is formed of a separate ring (11), which is arranged to be flexibly attached to the frame part (3) and that there is a flexible gasket (16) between the frame part (3) and the ring (11), so that the ring can move vertically and horizontally.

2. A duct component according to Claim 1, **characterized in that** there are centering pieces (13) in the ring (11) set in contact with the gasket (16) outside the latter, to centre the ring (11) in the opening.

3. A duct component according to Claim 1 or 2, **characterized in that** there is a fixed rim (17) in the frame part (3), set inside the gasket (16) to protect it and hold it in place.

4. A duct component according to one of Claims 1 - 3, **characterized in that** the disc damper (1) is jointed rigidly.

5. A duct component according to one of Claims 1 - 4, **characterized in that** the sealing surfaces are essentially circular in form and at least one of the sealing surfaces (15) is conical.

6. A duct component according to one of Claims 1 - 5, **characterized in that** the flexible gasket (16) is a tubular silicon gasket.

7. A duct component according to one of Claims 1 - 5, **characterized in that** the flexible gasket is graphite cord.

## Patentansprüche

1. Kanalkomponente mit einer so genannten Tellerklappe (1) zum Absperren des Strömungsquerschnitts des Kanals (4), einem Gehäuse (3) und Stellvorrichtungen (6, 7) zur Betätigung der Tellerklappe (1) sowie einer ersten Dichtungsfläche (15) am Gehäuse (3) und einer zweiten Dichtungsfläche an der Tellerklappe (1) und elastischen Elementen zum dichten gegenseitigen Zentrieren der besagten Dichtungsflächen, **dadurch gekennzeichnet, dass** die erste Dichtungsfläche von einem separaten Ring (11) gebildet wird, der flexibel am Gehäuse (3) angeordnet ist, und dass zwischen dem Gehäuse (3) und dem besagten Ring (11) eine elastische Dichtung (16) angeordnet ist, so dass sich der Ring in vertikaler und horizontaler Richtung bewegen kann.

2. Kanalkomponente nach Anspruch 1, **dadurch gekennzeichnet, dass** an dem Ring (11) Zentrierstücke (13) angeordnet sind, die in Berührung zur Außenseite der Dichtung 16 stehen und den Ring (11) in der Öffnung zentrieren.

3. Kanalkomponente nach Anspruch 1 oder 2, **dadurch gekennzeichnet, dass** am Gehäuse (3) ein stationärer Kranz (17) auf der Innenseite der Dichtung (16) zwecks Schützens derselben und Festhaltens derselben an der Stelle angeordnet ist.

4. Kanalkomponente nach irgendeinem der Ansprüche 1 bis 3, **dadurch gekennzeichnet, dass** die Tellerklappe (1) starr, d.h. spielfrei angelenkt ist.

5. Kanalkomponente nach irgendeinem der Ansprüche 1 bis 4, **dadurch gekennzeichnet, dass** die Dichtungsflächen im Wesentlichen Kreisform haben und wenigstens die eine der Dichtungsflächen (15) konisch geformt ist.

6. Kanalkomponente nach irgendeinem der Ansprüche 1 bis 5, **dadurch gekennzeichnet, dass** die elastische Dichtung (16) aus einer röhrenförmigen Silikondichtung besteht.

7. Kanalkomponente nach irgendeinem der Ansprüche 1 bis 5, **dadurch gekennzeichnet, dass** die elastische Dichtung aus Graphitschnur/-band besteht.

## Revendications

1. Élément de conduit comportant un registre à disque concave (1) destiné à obturer le passage du conduit (4), un châssis (3) et des mécanismes (6, 7) pour manoeuvrer le registre à disque concave (1), ainsi qu'une première surface d'étanchéité (15) sur le châssis (3) et une deuxième surface d'étanchéité sur le registre à disque concave (1), et des éléments souples servant à ajuster de façon étanche lesdites surfaces d'étanchéité l'une contre l'autre, **caractérisé par le fait que** la première surface d'étanchéité est formée par une bague distincte (11) fixée au châssis de façon non rigide et qu'un joint souple (16) se trouve disposé entre le châssis (3) et ladite bague (11), grâce à quoi la bague peut se mouvoir verticalement et horizontalement.

2. Élément de conduit conforme à la revendication 1 **caractérisé par le fait que** la bague (11) comporte des éléments de centrage (13) montés de façon à être en contact avec le joint (16) à l'extérieur de celui-ci et destinés à centrer la bague (11) par rapport à l'ouverture.

3. Élément de conduit conforme à la revendication 1 ou 2 **caractérisé par le fait que** le châssis (3) comporte une jante fixe (17) disposée à l'intérieur du joint (16) et destinée à le protéger et à le maintenir en place.

4. Élément de conduit conforme à l'une des revendications 1 à 3 **caractérisé par le fait que** le registre à disque concave (1) est articulé de façon rigide.

5. Élément de conduit conforme à l'une des revendications 1 à 4 **caractérisé par le fait que** les surfaces d'étanchéité sont essentiellement de forme circulaire et qu'au moins l'une des surfaces d'étanchéité (15) est conique.

6. Élément de conduit conforme à l'une des revendications 1 à 5 **caractérisé par le fait que** le joint souple (16) est un joint de silicone tubulaire.

7. Élément de conduit conforme à l'une des revendications 1 à 5 **caractérisé par le fait que** le joint souple est une corde de graphite.
